# FASCICULE DE BREVET EUROPEEN

(11) **EP 2 608 665 B1**
(45) Date de publication et mention de la délivrance du brevet: **06.08.2014**
(21) Numéro de dépôt: 11730243.0
(22) Date de dépôt: 10.06.2011
(51) Int. Cl.: A01N 37/06, A01N 35/02, A01N 63/02, A01P 19/00

(54) **UTILISATION D'UNE COMPOSITION COMME ATTRACTANT D'AUXILIAIRES**
VERWENDUNG EINER ZUSAMMENSETZUNG ALS HILFSLOCKSTOFF
USE OF A COMPOSITION AS AN AUXILIARY ATTRACTANT

(30) Priorité: 23.08.2010 EP 10173718
(43) Date de publication de la demande: 03.07.2013
(73) Titulaire: Université de Liège, 4000 Liège (BE)
(72) Inventeur: LEROY, Pascal, B-1030 Bruxelles (BE); SABRI, Ahmed, B-4031 Angleur (BE); HEUSKIN, Stéphanie, B-5030 Beuzet (BE); THONART, Philippe, B-5081 Saint-Denis (BE); HAUBRUGE, Eric, B-1457 Walhain (BE)
(74) Mandataire: Bounaga, Sakina
(86) Numéro de dépôt international: PCT/EP2011/059723
(87) Numéro de publication internationale: WO 2012/025270

(56) Documents cités:
- WO-A2-00/62608
- US-A1- 2005 147 635
- US-A1- 2005 249 769
- D. HAMMOND, S. RANGEL, I. KUBO: "Volatile aldehydes are promising broad-spectrum postharvest insecticides", JOURNAL OF AGRICULTURAL AND FOOD CHEMISTRY, vol. 48, no. 9, 2000, pages 4410-4417, XP002617377,
- NOVAK DUSAN ET AL: "beta.,.beta.-Dimethylakrylsäureester als Stechmückenrepellenta", ANGEWANDTE PARASITOLOGIE, FISCHER, JENA, DE, vol. 17, no. 4, 1 janvier 1976 (1976-01-01), pages 226-227, XP009143270, ISSN: 0003-3162
- SARAH Y DEWHIRST ET AL: "Production of semiochemical and allelobiotic agents as a consequence of aphid feeding", CHEMOECOLOGY ; EVOLUTIONARY, MECHANISTIC AND ENVIRONMENTAL APPROACHES TO CHEMICALLY-MEDIATED INTERACTION, BIRKHÄUSER-VERLAG, BA, vol. 20, no. 2, 15 décembre 2009 (2009-12-15), pages 89-96, XP019850690, ISSN: 1423-0445

## Description

### Domaine de l'invention

L'invention porte sur l'utilisation d'une composition pour attirer des insectes prédateurs ou des insectes parasitoïdes d'insectes ravageurs de plantes et induire l'oviposition desdits prédateurs ou parasitoïdes. L'invention porte aussi sur l'utilisation d'une composition pour prévenir l'apparition d'insectes ravageurs de plantes ou pour lutter contre ces ravageurs. L'invention porte aussi sur un procédé de prévention et/ou de lutte contre les insectes ravageurs de plantes, en particulier contre les pucerons (aphidiens).

### Etat de la technique

Les insectes phytophages causent des dommages économiquement importants dans les grandes cultures et réduisent fortement les rendements agricoles si leur éradication n'est pas assurée. Parmi ces ravageurs, les pucerons (par exemple *Acyrthosiphon pisum, Myzus persicae, Aphis fabae,* ...), par leur rapidité de développement et leur capacité de dissémination, constituent un véritable fléau en agriculture. En effet, en causant à la fois des dégâts directs et indirects, ils provoquent, chez les végétaux, des déformations irréversibles et sont à l'origine de plusieurs maladies virales (CAB International (1996). Crop Protection Compendium - Global module, 2nd Edition). D'autres ravageurs, tels que les cochenilles (par exemple *Planococcus citri*), les aleurodes (par exemple *Trialeurodes vaporariorum, Bemisia tabaci*) ou encore les psylles (par exemple *Psylla pyri*) causent également des dommages importants dans les grandes cultures.

Le recours à la lutte chimique (pesticides, insecticides, ...), encore largement répandu, conduit progressivement à la sélection d'individus résistants dont l'éradication devient de plus en plus difficile. De plus, des résidus de ces composés chimiques sont retrouvés dans l'environnement, affectent la biodiversité, contaminent nos denrées alimentaires et ont un impact négatif sur la santé humaine.

De nombreux moyens de lutte contre les ravageurs - dont les pucerons - ont déjà été décrits et font communément appel à des molécules insecticides (CN1068473 ; JP6192014). Cependant, d'autres méthodes alternatives de lutte ont également été décrites et reposent sur (1) l'utilisation de pièges attractifs associés à au moins une substance insecticide (US4369176; WO8501638 ; US5928634), (2) l'utilisation de diffuseurs contenant des substances répulsives (US5792467), (3) l'utilisation de microorganismes pathogènes pour le(s) ravageur(s) ciblé(s) (KR20040006457 ; CN1068473; WO2008025108 ; WO9101802), (4) l'utilisation d'ennemis naturels (auxiliaires ou « beneficials ») (US6562332 ; US6544513 ; GB2305843 ; US20050178337; US4418647; EP1161863) et (5) l'utilisation de sémiochimiques (molécules organiques volatiles affectant le comportement de certains insectes) généralement associés à un système de piégeage ou à une substance insecticide (US2005249769; US6890525 ; US4849216; US62244890; US6267953; US6074634). D'autres techniques proposent encore d'organiser les cultures de telle manière à promouvoir la présence d'ennemis naturels (DE4115493). WO 00/62608 décrit des procédés et des compositions utilisables pour attirer des insectes prédateurs par l'application de molécules volatiles.

Parmi les différents ennemis naturels des pucerons, les coccinelles (*Adalia bipunctata, Harmonia axyridis,* ...) sont les insectes auxiliaires les plus fréquemment utilisés (CN1528136; US6562332; US6890525) mais les chrysopes (*Chrysoperla carnea, Chrysoperla lucasina,* ...) (US6562332) et les insectes parasitoïdes (*Aphidius ervi, Aphidius colemani,* ...) (US6890525) sont aussi mentionnés. L'usage de ces auxiliaires repose essentiellement sur leur placement au champ (larves, momies, pupes, ...) ou sur des lâchers inondatifs (adultes).

Plusieurs inconvénients sont liés à l'utilisation d'auxiliaires selon ces méthodes, par exemple le lâcher d'adultes ne garantit pas que ces derniers vont agir *in-situ* ; en effet, la plupart d'entre eux sont mobiles et capables de quitter la zone ciblée.

La présente invention a donc pour objet de remédier à au moins un des inconvénients cités ci-dessus.

### Bref résumé de l'invention

La présente invention concerne l'utilisation d'une composition comprenant de l'acide 3-méthyl-2-buténoïque et/ou du 3-méthyl-2-buténal, afin d'attirer et de maintenir les auxiliaires dans des zones-cibles de façon simple, reproductible et peu coûteuse tout en induisant les comportements d'oviposition, de prédation et de parasitisme chez ces mêmes auxiliaires dont les larves se nourrissent d'insectes ravageurs de plantes. Les inventeurs ont montré que l'acide 3-méthyl-2-buténoïque et/ou le 3-méthyl-2-buténal sont caractérisés en ce qu'ils agissent seuls ou ensemble en tant qu'attractants et en tant qu'inducteurs de ponte (oviposition).

En particulier, la présente invention concerne l'utilisation d'une composition comprenant de l'acide 3-méthyl-2-buténoïque et/ou du 3-méthyl-2-buténal, pour attirer des insectes prédateurs ou des insectes parasitoïdes d'insectes ravageurs de plantes et induire l'oviposition desdits prédateurs ou parasitoïdes.

La présente invention concerne aussi un procédé pour attirer des insectes prédateurs d'insectes ravageurs de plantes ou des insectes parasitoïdes d'insectes ravageurs de plantes et induire l'oviposition desdits prédateurs ou parasitoïdes, comprenant l'utilisation d'une composition comprenant de l'acide 3-méthyl-2-buténoïque et/ou du 3-méthyl-2-buténal.

Selon un mode de réalisation particulier, l'invention concerne aussi l'utilisation d'une composition comprenant de l'acide 3-méthyl-2-buténoïque et/ou du 3-méthyl-2-buténal, pour prévenir l'apparition d'insectes ravageurs de plantes ou pour lutter contre ces ravageurs.

La présente invention concerne aussi un procédé de prévention ou de lutte contre des insectes ravageurs de plantes comprenant l'application à proximité de ou directement sur la plante à protéger ou à traiter ou une partie de celle-ci d'une composition comprenant de l'acide 3-méthyl-2-buténoïque et/ou du 3-méthyl-2-buténal, pour prévenir l'apparition d'insectes ravageurs de plantes ou pour lutter contre ces ravageurs.

L'invention couvre également l'utilisation de la bactérie *Staphylococcus sciuri* pour produire, de façon biologique, le 3-méthyl-2-buténal.

La présente invention porte donc à la fois sur un attractant et sur un inducteur d'oviposition (ponte) ayant pour but de renforcer l'efficacité de la lutte biologique tout en résolvant les problèmes techniques liés aux méthodes de lutte contre des ravageurs de plantes et de cultures au moyen d'auxiliaires. En effet, plusieurs inconvénients sont liés à l'utilisation d'auxiliaires selon les méthodes actuelles : le dépôt des larves auxiliaires sur le végétal est contraignant et requiert du temps ; le lâcher d'adultes auxiliaires ne garantit pas que ces derniers vont agir in-situ (la plupart d'entre eux sont mobiles et capables de quitter la zone ciblée) ; le dépôt de momies ou de pupes donne lieu à des adultes auxiliaires qui peuvent également quitter la zone ciblée.

En recourant à l'utilisation de ladite composition, la présente invention a donc pour objet de remédier à ces inconvénients en permettant d'attirer, de maintenir et d'induire fortement et artificiellement (en l'absence de ravageurs) l'oviposition des auxiliaires que ce soit sous serre, dans les grandes cultures ou dans tout autre environnement infesté ou susceptible d'être infesté par les ravageurs (entre autres les pucerons).

D'autres aspects, particularités et avantages de la présente invention apparaîtront à la lecture de la description qui va suivre et des exemples qui l'illustrent donnés simplement à titre d'illustration et qui ne sauraient en aucune façon limiter la portée de l'invention.

### Description détaillée de l'invention

L'invention porte sur l'utilisation d'une composition comprenant de l'acide 3-méthyl-2-buténoïque et/ou du 3-méthyl-2-buténal, afin d'attirer les insectes prédateurs et les insectes parasitoïdes et en induire l'oviposition.

L'invention porte aussi sur l'utilisation d'une composition comprenant de l'acide 3-méthyl-2-buténoïque et/ou du 3-méthyl-2-buténal, afin d'attirer les insectes prédateurs et les insectes parasitoïdes et d'en induire l'oviposition pour lutter contre les ravageurs phytophages, en particulier les pucerons (aphidiens). L'invention comprend aussi l'utilisation de ces molécules à proximité ou sur un végétal susceptible d'être infesté ou déjà infesté par un insecte ravageur.

La composition permet d'attirer et de maintenir les auxiliaires dans des zones-cibles de façon simple, reproductible et peu coûteuse tout en induisant les comportements d'oviposition, de prédation et de parasitisme chez ces mêmes auxiliaires dont les larves se nourrissent d'insectes ravageurs de plantes.

La présente invention concerne aussi l'utilisation de l'acide 3-méthyl-2-buténoïque et/ou du 3-méthyl-2-buténal, molécules caractérisées en ce qu'elles agissent en tant qu'attractant et en tant qu'inducteur de ponte (oviposition) d'insectes prédateurs ou d'insectes parasitoïdes, encore appelés « auxiliaires » ou « ennemis naturels ».

En particulier la présente invention concerne l'utilisation de la composition comprenant de l'acide 3-méthyl-2-buténoïque et/ou du 3-méthyl-2-buténal, pour attirer les insectes auxiliaires et en induire l'oviposition pour lutter contre les ravageurs phytophages.

Outre l'attraction et l'induction de l'oviposition d'insectes prédateurs et d'insectes parasitoïdes, la composition comprenant de l'acide 3-méthyl-2-buténoïque et/ou du 3-méthyl-2-buténal permet également de renforcer la pollinisation en augmentant la présence et en maintenant des insectes pollinisateurs (ordre des Diptera, ordre des Hymenoptera, ordre des Lepidoptera, ordre des Coleoptera, ordre des Neuroptera) dans les zones traitées. L'augmentation du taux de pollinisation est applicable à tous types de plantes, et notamment aux graminées et dicotylédones, aux plantes annuelles, bisannuelles et pérennes, aux herbacées, aux légumes, aux céréales dont le blé, l'orge et le riz, au mais, sorgho, millet, aux oléagineux, aux protéagineux, aux pommes de terre, aux tomates, betteraves, cannes a sucre, chicorées, tabac, aux plantes ligneuses, aux arbres, fruitiers ou non, aux vignes, aux lianes, aux végétaux d'ornement, etc.

Selon un mode de réalisation particulier, la composition accroit le taux de pollinisation de plantes (nombre de fruits obtenus par rapport au nombre de fleurs lors de la floraison) d'au moins 15%, de préférence d'au moins 20%, de préférence d'au moins 30%, de préférence d'au moins 40%, de préférence d'au moins 50%.

On appelle auxiliaire ou ennemi naturel tout être vivant qui par son mode de vie entraîne l'inhibition ou la destruction d'espèces nuisibles à l'agriculture ou l'horticulture. Il s'agit de tout ennemi naturel qui, par son mode de vie, apporte son concours à la destruction de ravageurs nuisibles aux cultures. Plus particulièrement les ennemis naturels concernés par la présente invention, tels que les insectes prédateurs de ravageurs appartiennent à l'ordre des Neuroptera, des Coleoptera et des Diptera. Plus particulièrement ils appartiennent aux familles des Syrphidae, Coccinellidae ou Chrysopidae. En particulier, les insectes prédateurs appartiennent à l'espèce *balteatus* du genre *Episyrphus* (famille des Syrphidae et ordre Diptera) ou encore à l'espèce *carnea* du genre *Chrysopa* (famille des Chrysopidae et ordre Neuroptera), ou encore à l'espèce *axyridis* du genre *Harmonia* (famille des Coccinellidae et ordre Coleoptera), ou encore à l'espèce *bipunctata* du genre *Adalia* (famille des Coccinellidae et ordre Coleoptera), ou encore à l'espèce *septempunctata* du genre *Coccinella* (famille des Coccinellidae et ordre Coleoptera). Selon un mode de réalisation particulier, les insectes parasitoïdes appartiennent à l'ordre des Hymenoptera. Plus particulièrement ils appartiennent aux familles des Braconidae (*Aphidius rhopalosiphi, Aphidius ervi, Aphidius colemani, Aphidius matricariae, Aphidius nigripes*), des Aphelinidae (*Aphelinus abdominalis, Encarsia formosa, Eretmocerus eremicus*) et des Encyrtidae (*Leptomastix dactylopii*).

On appelle ravageur de plantes, insecte ravageur ou ravageur phytophage : tout être vivant qui, par son action et son mode de vie, affecte la croissance des végétaux, ce qui entraîne des pertes économiques et de rendement. Les ravageurs concernés par la présente invention appartiennent essentiellement à l'ordre des Homoptera et à la famille des Aphidae. Les espèces appartenant à la famille des Aphidae et concernées par la présente invention sont notamment mais de façon non limitative *Acyrthosiphon pisum, Myzus persicae, Aphis fabae* et *Megoura viciae.* Des ravageurs autres que les aphidiens sont également visés par la présente invention, notamment d'autres Homoptères comme les cochenilles (par exemple l'espèce *Planococcus citri*), les aleurodes (par exemple les espèces *Trialeurodes vaporariorum* et *Bemisia tabaci*) ou encore les psylles (par exemple l'espèce *Psylla pyri*). Selon un mode de réalisation préféré, les insectes ravageurs sont des pucerons, des cochenilles, des aleurodes, ou des psylles.

Dans un mode de mise en oeuvre particulier, la composition comprend au moins 0.00005% en poids de 3-méthyl-2-buténal. Par exemple, la composition peut comprendre au moins 0.0001% en poids de 3-méthyl-2-buténal, par exemple au moins 0.001%, par exemple au moins 0.005%, par exemple au moins 0.007%, par exemple au moins 0.01% en poids de 3-méthyl-2-buténal. Par exemple, la composition peut comprendre entre 0.00005% et 2% en poids de 3-méthyl-2-buténal, par exemple entre 0.0001% et 1 %, par exemple entre 0.001% et 0.5%, par exemple entre 0.005% et 0.3%, par exemple entre 0.007% et 0.2%, par exemple entre 0.01% et 0.1%, entre 0.00005% et 0.001% en poids de 3-méthyl-2-buténal, par exemple entre 0.0001% et 0.0005% ; par exemple 0.01%, 0.02%, 0.05%, 0.075%, 0.1% en poids de 3-méthyl-2-buténal.

Dans un mode de mise en oeuvre particulier, on utilise une concentration minimale en 3-méthyl-2-buténal égale ou supérieure à 0.005 mM. Par exemple, la composition peut comprendre au moins 0.01 mM de 3-méthyl-2-buténal, par exemple au moins 0.1 mM, par exemple au moins 0.5 mM, par exemple au moins 1 mM de 3-méthyl-2-buténal. Par exemple on peut utiliser une concentration en 3-méthyl-2-buténal comprise entre 0.005 mM et 200 mM, de préférence comprise entre 0.01 mM et 100 mM, par exemple entre 0.1 mM et 50 mM, par exemple entre 0.5 mM et 30 mM, par exemple entre 1 mM et 10 mM de 3-méthyl-2-buténal.

Dans un mode de mise en oeuvre particulier, la composition comprend au moins 0.00005% en poids d'acide 3-méthyl-2-buténoïque, par exemple au moins 0.0001%, par exemple au moins 0.001%, au moins 0.005%, au moins 0.007%, au moins 0.01% en poids d'acide 3-méthyl-2-buténoïque. Par exemple, la composition comprend entre 0.00005% et 2% en poids d'acide 3-méthyl-2-buténoïque, par exemple entre 0.0001 % et 1 %, par exemple entre 0.001 % et 0.5%, par exemple entre 0.005% et 0.3%, par exemple entre 0.007% et 0.2%, par exemple entre 0.01% et 0.1%, entre 0.00005% et 0.001% en poids d'acide 3-méthyl-2-buténoïque, par exemple entre 0.0001% et 0.0005%, par exemple 0.01%, 0.02%, 0.05%, 0.075%, 0.1% en poids d'acide 3-méthyl-2-buténoïque.

Dans un mode de mise en oeuvre préféré, on utilise une concentration minimale en acide 3-méthyl-2-buténoïque égale ou supérieure à 0.005 mM, par exemple égale ou supérieure à 0.01 mM par exemple égale ou supérieure à 0.1 mM par exemple égale ou supérieure à 0.5 mM par exemple égale ou supérieure à 1 mM. Par exemple on peut utiliser une concentration en acide 3-méthyl-2-buténoïque comprise entre 0.005 mM et 200 mM, de préférence comprise entre 0.01 mM et 100 mM, par exemple entre 0.1 mM et 50 mM, par exemple entre 0.5 mM et 30 mM, par exemple entre 1 mM et 10 mM.

Dans un mode de mise en oeuvre préféré, la composition comprend entre 0.00005% et 2% en poids de 3-méthyl-2-buténal, par exemple entre 0.0001% et 1 %, par exemple entre 0.001% et 0.5%, par exemple entre 0.005% et 0.3%, par exemple entre 0.007% et 0.2%, par exemple entre 0.01% et 0.1%, par exemple 0.01%, 0.02%, 0.05%, 0.075%, 0.1% en poids de 3-méthyl-2-buténal et en outre comprend entre 0.00005% et 2% en poids d'acide 3 méthyl 2-buténoïque, par exemple entre 0.0001% et 1%, par exemple entre 0.001% et 0.5%, par exemple entre 0.005% et 0.3%, par exemple entre 0.007% et 0.2%, par exemple entre 0.01% et 0.1%, en poids, par exemple 0.01%, 0.02%, 0.05%, 0.075%, 0.1% en poids d'acide 3-méthyl-2-buténoïque. Par exemple, la composition peut comprendre entre 0.0001% et 1% en poids de 3-méthyl-2-buténal, et entre 0.0001% et 1% en poids d'acide 3-méthyl-2-buténoïque. Par exemple, la composition peut comprendre entre 0.005% et 0.3% en poids de 3-méthyl-2-buténal et entre 0.001% et 0.5% en poids d'acide 3-méthyl-2-buténoïque. Par exemple, la composition peut comprendre entre 0.007% et 0.2% en poids de 3-méthyl-2-buténal, entre 0.005% et 0.3% en poids d'acide 3-méthyl-2-buténoïque. Par exemple, la composition peut comprendre entre 0.01% et 0.1% en poids de 3-méthyl-2-buténal, et entre 0.007% et 0.2% en poids d'acide 3-méthyl-2-buténoïque. Par exemple, la composition peut comprendre entre 0.01% et 0.09% en poids de 3-méthyl-2-buténal, entre 0.01% et 0.1% en poids d'acide 3-méthyl-2-buténoïque.

Selon un mode de réalisation particulier la composition comprend en outre la bactérie *Staphylococcus sciuri.*

Dans un mode de mise en oeuvre particulier, on utilise une concentration minimale de 10⁵ unités formant des colonies (CFU) de ladite bactérie par gramme ou par millilitre de composition. Par exemple on peut utiliser de 10⁵ à 10⁸ CFU/ml pour une formulation liquide. Pour la formulation déshydratée, on peut utiliser de 10⁶ à 10⁹ CFU/g. Par exemple, on utilise au moins 10⁵, au moins 10⁶, au moins 10⁷, au moins 10⁸, ou au moins 10⁹ CFU par gramme ou millilitre de composition.

Selon un mode de réalisation particulier la composition comprend en outre au moins un composé choisi dans le groupe comprenant le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, le benzèneéthanol et leurs mélanges. De préférence, la composition comprend le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, le benzèneéthanol.

Selon un autre mode de réalisation particulier la composition comprend au moins la bactérie *Staphylococcus sciuri,* une source de carbone et une source d'azote et au moins un composé volatil choisi dans le groupe comprenant le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, le benzèneéthanol et leurs mélanges. Par exemple, la composition comprend au moins la bactérie *Staphylococcus sciuri,* une source de carbone et une source d'azote et les composés volatils suivants : le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, et le benzèneéthanol.

Selon un autre mode de réalisation particulier la composition comprend au moins une source de carbone et une source d'azote et au moins un composé volatil choisi dans le groupe comprenant le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, le benzèneéthanol et leurs mélanges. Par exemple, la composition comprend une source de carbone, une source d'azote et les composés volatils suivants : le 2 -propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, et le benzèneéthanol.

Dans un premier mode de mise en oeuvre la composition est obtenue en utilisant de l'acide 3-méthyl-2-buténoïque et/ou du 3-méthyl-2-buténal de source commerciale.

Dans un autre mode de mise en oeuvre, la composition est obtenue par la mise en culture de la bactérie *Staphylococcus sciuri.* Selon ce mode de mise en oeuvre particulier, la composition peut comprendre la bactérie *Staphylococcus sciuri,* du 3-méthyl-2-buténal et, de l'acide 3-méthyl-2-buténoïque et facultativement les ingrédients nécessaires pour la culture de la bactérie *Staphylococcus sciuri.* Par exemple, la composition peut comprendre la bactérie *Staphylococcus sciuri,* du 3-méthyl-2-buténal et de l'acide 3-méthyl-2-buténoïque, au moins une source de carbone, au moins une source d'azote, facultativement des vitamines, et facultativement des minéraux. Dans ce mode de mise en oeuvre particulier, on utilise une concentration minimale de 10⁵ CFU de ladite bactérie par gramme ou par millilitre de composition. Par exemple on peut utiliser de 10⁵ à 10⁸ CFU/ml pour une formulation liquide, par exemple on utilise 10⁵, 10⁶, 10⁷ ou 10⁸ CFU/ml, et de 10⁶ à 10⁹ CFU/g pour la formulation déshydratée, par exemple 10⁶, 10⁷, 10⁸, ou 10⁹ CFU/ml.

Dans un mode de mise en oeuvre particulier, on utilise comme source d'azote des acides aminés issus d'hydrolysats chimiques et/ou enzymatiques de protéines d'origines diverses (lait, pois, blé, soja, levure...), du sulfate d'ammonium..., de la peptone, etc.

Dans un mode de mise en oeuvre particulier, on utilise comme autres ingrédients, des vitamines et/ou des extraits divers (levure, plante, viande...).

Dans un mode de mise en oeuvre particulier, on utilise comme minéraux des sels minéraux tels que des sels de fer, phosphate, soufre, calcium, potassium, nitrate, nitrite, etc.

L'invention est applicable à tous types de plantes, et notamment aux graminées et dicotylédones, aux plantes annuelles, bisannuelles et pérennes, aux herbacées, aux légumes, aux céréales dont le blé, l'orge et le riz, au maïs, sorgho, millet, aux oléagineux, aux protéagineux, aux pommes de terre, aux tomates, betteraves, cannes à sucre, chicorées, tabac, aux plantes ligneuses, aux arbres, fruitiers ou non, aux vignes, aux lianes, aux végétaux d'ornement, etc.

Ladite composition peut être sous forme de liquide, concentré ou non, de colloïde, de poudre, mouillable ou non, de granulés, de billes, dispersibles ou autres, ou de toute autre forme adaptée à la mise en contact avec le ou les organes de la plante que cible le traitement, par exemple, pulvérisation après dilution, mise en suspension ou autre, dans l'eau ou un autre véhicule, par exemple sur les parties aériennes du végétal, diffusion à partir d'un dispositif à proximité ou sur la plante, etc.

Selon un mode de réalisation préféré la composition peut se présenter sous forme d'une solution aqueuse ou huileuse, sous forme de poudre sèche, sous forme de poudre mouillable, sous forme de silice colloïdale ou encore sous forme de billes (encapsulation).

Dans un mode de mise en oeuvre particulier, la composition comprend en outre un ou plusieurs agents de formulation. Le ou les agents de formulation peuvent être constitué(s) de tout composé ou toute matière inerte permettant de rendre possible, faciliter, ou optimiser le transport, le stockage, la manipulation, et/ou l'application de la matière active sur la plante ou des parties de celle-ci.

Le ou les agents de formulation, et notamment ceux adaptés à la pulvérisation, peuvent être choisis notamment parmi l'eau, tous les agents tensioactifs, dispersants, conservateurs, mouillants, émulsifiants, agents d'adhésion, tampon-pH, etc., seuls ou en mélanges.

Dans un mode de réalisation particulier, la composition peut aussi comprendre en outre un autre agent actif, de préférence un agent fongicide, antibactérien ou antiviral. Pour une composition à base de la bactérie *Staphylococcus sciuri,* l'antibactérien est avantageusement ajouté au dernier moment pour que les produits métaboliques soient préalablement produits par la bactérie vivante.

Selon un mode de réalisation particulier, la composition est formulée sous forme de billes. Dans un mode de mise en oeuvre particulier, les ingrédients de la composition peuvent être encapsulés dans des billes par exemple insolubles dans l'eau, formées d'une matrice polymérique comprenant une émulsion dispersée dans la matrice. Cette émulsion comprend de l'acide 3-méthyl-2-buténoïque et/ou du 3-méthyl-2-buténal, facultativement une huile et facultativement un composé antioxydant.

La matrice polymérique peut être choisie parmi l'alginate, chitine, carragénane, gomme guar, « locus bean » gum, chitosan, pectine carboxymethyl cellulose. Les huiles peuvent être choisies parmi les huiles végétales tel que l'huile de tournesol, l'huile de paraffine ; etc. ; les antioxydants peuvent être choisis parmi les vitamines (E, A, C), les caroténoïdes (alpha-carotène, beta-carotène, lycopène...), les flavonoïdes (catéchine...), les isoflavones, les minéraux (sélénium, zinc), le coenzyme Q10, la glutathionne, etc.

L'invention porte aussi sur l'application (mise en oeuvre) de ladite composition. Selon un mode de réalisation particulier, la composition est administrée par pulvérisation, par dispersion, par épandage ou par le placement de diffuseurs contenant la composition. En variante, il est possible d'appliquer la composition sous forme de mélange à des engrais, support de culture, à l'eau d'arrosage, ou autre.

L'application peut être réalisée par pulvérisation de solution aqueuse, ou de solution huileuse, ..., par dispersion, par épandage de poudre, de billes ou de silice colloïdale, par le placement de diffuseurs contenant la composition ou par toute autre technique d'application en champ ou sur n'importe quel végétal en vue de les protéger ou de les débarrasser d'insectes ravageurs. L'application peut s'effectuer sur l'ensemble de la zone-cible, à proximité de la zone-cible (par exemple en bordure de champ, ...) ou sur une partie de la zone-cible (par exemple sur la partie centrale de la culture ou sur des bandes de la culture régulièrement espacées, ...). On entend par zone-cible toute culture située en milieux ouverts ou sous serre.

La quantité appliquée est définie par l'homme du métier, en fonction notamment de la formulation de la composition, du type de végétal, etc. La quantité appliquée est de préférence suffisante pour prévenir l'apparition d'insectes ravageurs de plantes ou pour lutter contre ces ravageurs. Cette quantité peut être déterminée par exemple par des essais sous serre ou en champ.

Selon un mode de réalisation particulier, la composition est appliquée ou utilisée à une dose efficace d'acide 3-méthyl-2-buténoïque comprise entre 5 µg/m² et 5 g/m² et/ou une dose efficace de 3-méthyl-2-buténal comprise entre 5 µg/m² et 5 g/m².

Selon un mode de réalisation préféré, la composition est appliquée ou utilisée à une dose efficace d'acide 3-méthyl-2-buténoïque comprise entre 5 µg/m² et 5 g/m², par exemple entre 10 µg/m² et 2 g/m², par exemple entre 100 µg/m² et 1 g/m², par exemple 500 µg/m² et 500 mg/m².

Selon un mode de réalisation préféré, la composition est appliquée ou utilisée à une dose efficace de 3-méthyl-2-buténal comprise entre 5 µg/m² et 5 g/m², par exemple entre 10 µg/m² et 2 g/m², par exemple entre 100 µg/m² et 1 g/m², par exemple entre 500 µg/m² et 500 mg/m².

Selon un mode de réalisation particulier, la composition est appliquée ou utilisée à une dose efficace d'acide 3-méthyl-2-buténoïque comprise entre 5 µg/m² et 5 g/m² et une dose efficace de 3-méthyl-2-buténal comprise entre 5 µg/m² et 5 g/m².

Selon un mode de réalisation préféré, la composition est appliquée ou utilisée à une dose efficace d'acide 3-méthyl-2-buténoïque comprise entre 10 µg/m² et 2 g/m², par exemple entre 100 µg/m² et 1 g/m², par exemple 500 µg/m² et 500 mg/m² et une dose efficace de 3-méthyl-2-buténal comprise entre 10 µg/m² et 2 g/m², par exemple entre 100 µg/m² et 1 g/m², par exemple 500 µg/m² et 500 mg/m².

Compte tenu de son mode d'action proposé, la composition doit permettre de prévenir l'apparition d'insectes ravageurs de plantes ou de lutter contre ces ravageurs pendant une période de temps importante, pouvant dépasser un mois. Bien entendu, une application répétée peut être envisagée, à des intervalles à définir par l'utilisateur.

Selon un mode de réalisation particulier, le traitement par les compositions comprenant de l'acide 3-méthyl-2-buténoïque et/ou du 3-méthyl-2-buténal, induisant l'oviposition d'insectes prédateurs ou d'insectes parasitoïdes, accélère la lutte contre les insectes ravageurs de plantes déjà présents sur les plantes et réduit le temps d'infestation des plantes par les ravageurs d'au moins 20 %.

L'utilisation de la composition permet, en présence des ravageurs, de réduire le temps d'infestation des plantes par les ravageurs d'au moins 20 %.

L'invention couvre également l'utilisation de la bactérie *Staphylococcus sciuri* pour produire, de façon biologique, le 3-méthyl-2-buténal.

Dans un mode de mise en oeuvre préféré, la composition est obtenue par la mise en culture de la bactérie *Staphylococcus sciuri.* Selon ce mode de mise en oeuvre, la présente invention repose aussi sur l'utilisation d'une composition comprenant la bactérie *Staphylococcus sciuri* et au moins une source de carbone, au moins une source d'azote, facultativement des vitamines, et facultativement des minéraux, pour attirer des insectes auxiliaires et induire l'oviposition de ces insectes auxiliaires (même en l'absence de ravageurs). La présente invention repose aussi sur l'utilisation d'une composition comprenant la bactérie *Staphylococcus sciuri* et au moins une source de carbone, au moins une source d'azote, facultativement des vitamines, et facultativement des minéraux, pour prévenir l'apparition d'insectes ravageurs de plantes ou pour lutter contre ces ravageurs.

La présente invention repose aussi sur un procédé de prévention ou de lutte contre des insectes ravageurs de plantes comprenant la mise en solution d'une composition comprenant la bactérie *Staphylococcus sciuri* et au moins une source de carbone, au moins une source d'azote, facultativement des vitamines, et facultativement des minéraux, et l'application à proximité de ou directement sur la plante à protéger ou à traiter ou une partie de celle-ci de cette composition, pour prévenir l'apparition d'insectes ravageurs de plantes ou pour lutter contre ces ravageurs.

Dans un mode de mise en oeuvre particulier, on utilise comme source de carbone du fructose, du galactose, du glucose, du mannose, du maltose, du mélibiose, du sucrose, du tréhalose, du turanose, de l'erlose, du mélézitose, ou du raffinose ou un mélange de ceux-ci.

Dans un mode de mise en oeuvre particulier, on utilise comme source d'azote des acides aminés issus d'hydrolysats chimiques et/ou enzymatiques de protéines d'origines diverses (lait, pois, blé, soja, levure...), du sulfate d'ammonium..., de la peptone, etc. Dans un mode de mise en oeuvre particulier, on utilise comme autres ingrédients, des vitamines et des extraits divers (levure, plante, viande...).

Dans un mode de mise en oeuvre particulier, on utilise comme minéraux des sels minéraux tels que des sels de fer, phosphate, soufre, calcium, potassium, nitrate, nitrite, etc.

Le milieu de culture peut par exemple comprendre de 10 à 20g/l de glucose, 10 à 30g/l de peptone de caséine et 5 à 15g/l d'extrait de levure.

Selon ce mode de réalisation, en quelques jours voire en quelques heures, une production rapide et en quantité de la composition peut être réalisée en fermenteur pour permettre un développement optimal de la bactérie *Staphylococcus sciuri* dans une solution comprenant les constituants mentionnés ci-dessus. En fonction du fermenteur utilisé et de sa géométrie, l'agitation et le débit d'aération sont généralement adaptés pour avoir les conditions suivantes : une température entre 20-37°C, un coefficient de transfert d'oxygène Kla entre 35 et 160 h⁻¹ et une vitesse périphérique VP entre 0,8 et 2,1 m/s.

La dite composition peut être utilisée telle quelle ou après centrifugation. Cette dernière étape permet l'élimination du microorganisme tout en conservant les métabolites produits. Des conservateurs, de préférence naturels (du domaine alimentaire, par exemple) mais aussi synthétiques ou artificiels, peuvent être ajoutés afin de stabiliser la composition en empêchant les microorganismes de continuer leur croissance. Selon ce mode de réalisation le produit final peut être une solution liquide ou une poudre à utiliser tel quel ou à mettre en solution avant une application sur le terrain (pulvérisation, dispersion, ...).

L'invention porte aussi sur l'utilisation de la composition comprenant de l'acide 3-méthyl-2-buténoïque et/ou du 3-méthyl-2-buténal, pour l'élevage d'insectes prédateurs ou d'insectes parasitoïdes d'insectes ravageurs de plantes. Selon un mode de réalisation particulier, la composition utilisée pour l'élevage d'insectes prédateurs est utilisée en l'absence de ravageurs de plantes. Selon un autre mode de réalisation particulier, la composition utilisée pour l'élevage d'insectes parasitoïdes est utilisée en l'absence ou en présence de ravageurs de plantes.

Les exemples suivants sont donnés à titre illustratif et non limitatif de la présente invention, susceptibles de variantes aisément accessibles à l'homme de l'art.

### Exemples

### Exemple 1 : attraction et stimulation de l'oviposition en tunnel de vol (conditions de laboratoire)

Les essais en conditions de laboratoire (température moyenne de 21.1°C et HR moyenne de 72.6%) ont été menés dans un tunnel de vol en Plexiglas® (L x l x h = 2.4 x 0.8 x 0.6 m) pour le syrphe *Episyrphus balteatus* (De Geer) (Diptera : Syrphidae). Un ventilateur a été utilisé pour pousser l'air dans le tunnel à une vitesse constante de 0.4 m/s. L'air a été filtré sur du charbon actif et poussé à travers une série de filtres afin de créer un flux laminaire. La vitesse de l'air à travers le tunnel a été mesurée avec un anémomètre à fil chaud (Testo 405-V1) et a été maintenue constante aux deux extrémités du tunnel. La lumière a été assurée par des tubes néon placés 40 cm au-dessus du tunnel (intensité lumineuse de 2300 lux) (Testo 545).

Des plants de fève (*Vicia faba)* ont été pulvérisés avec 1 ml des formulations suivantes : (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (obtenue comme décrit à l'exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Les plantes traitées ont été placées à l'une des extrémités du tunnel de vol alors que les individus testés (n=10) ont été lâchés à l'autre extrémité. Les contrôles négatifs ont été assurés par des plantes non traitées.

Le nombre d'individus observés sur les plantes et le nombre d'oeufs déposés sur les plantes ont été comptabilisés après 2 à 3 h d'essais (Tableau 1).

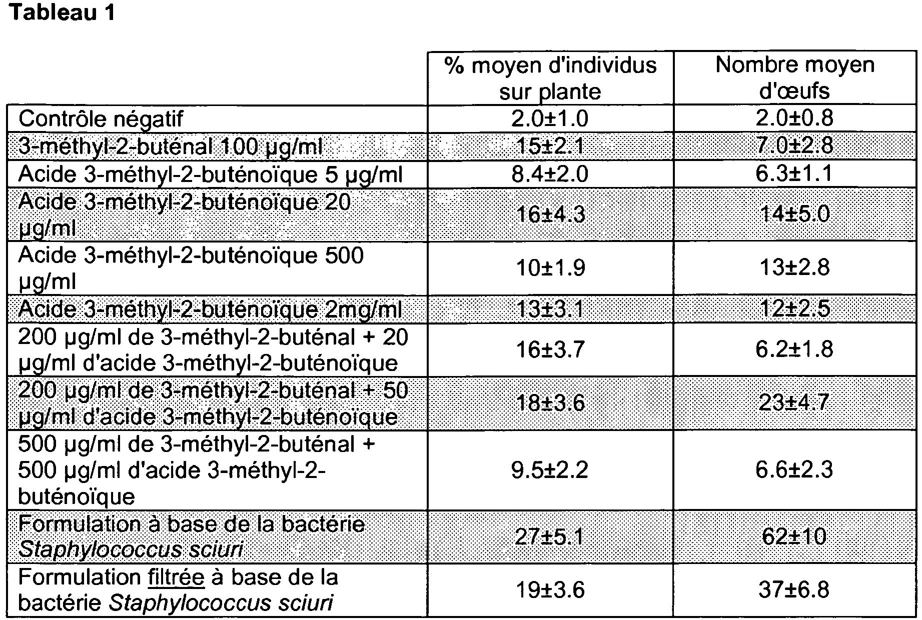

### Exemple 2 : attraction et stimulation de l'oviposition dans une serre

Les essais sous serre, où des fèves (*Vicia faba)* ont été cultivées sur une surface totale de 50 m², ont été menés avec le syrphe *Episyrphus balteatus* (De Geer) (Diptera : Syrphidae). Ces essais ont été réalisés à une température moyenne de 26.1°C et à une humidité relative moyenne de 69.7%. Sur toute la longueur de la serre, une bande centrale de 50 cm de large a été pulvérisée avec 10 ml/m² des formulations suivantes : (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (voir exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Des surfaces identiques non traitées ont constitués les contrôles négatifs.

Un lâcher de 100 syrphes *Episyrphus balteatus* (âgés de 2 à 4 semaines) a été réalisé au centre de la serre. Après 12 à 24h, le nombre d'individus localisés sur les plants de fève ainsi que le nombre d'oeufs ont été comptabilisés (Tableau 2).

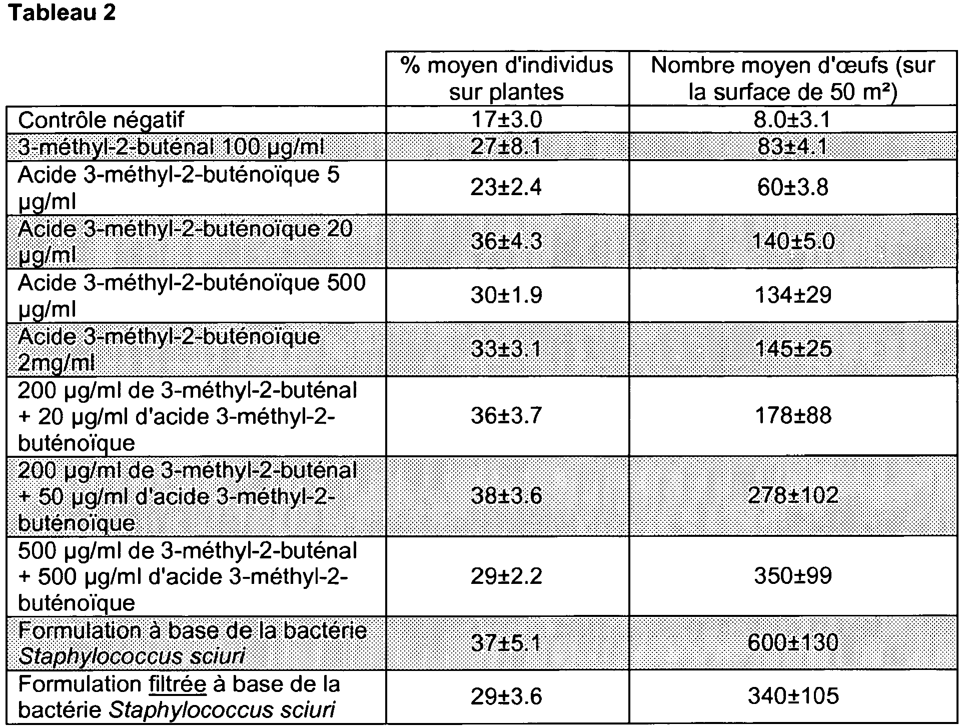

Des essais complémentaires ont été réalisés dans les mêmes conditions, à l'exception de la densité de pulvérisation qui a été augmentée à 100 ml/m². Tenant compte de la dispersion des résultats expérimentaux reprises au tableau 2, tous les résultats obtenus sont comparables à plus ou moins 15% à ceux repris dans le tableau 2.

### Exemple 3 : attraction et stimulation de l'oviposition avec le 3-méthyl-2-buténal en plein champ de pommes de terre

Les expérimentations ont été menées dans des champs de pommes de terre (*Solanum tuberosum*) à une température moyenne de 18.7°C et à une humidité relative moyenne de 79.2%. Dans les champs, des bandes de 50 cm de large ont été pulvérisées tous les 10 m avec une solution aqueuse de 3-méthyl-2-buténal à une concentration de 100 µg/ml et à raison de 10 ml/m². Les solutions aqueuses de 3-méthyl-2-buténal ont été préparées 4 à maximum 48 h avant leur application. Des cultures non traitées ont constitués les contrôles négatifs. 25 pièges collants ont été placés de façon aléatoire dans les cultures traitées et dans les cultures contrôles pour piéger les insectes attirés. Ces pièges ont été relevés après 5 à 10 jours. Le nombre d'individus piégés et le nombre d'oeufs observés sur les plants de pommes de terre ont été comptabilisés en distinguant les Syrphidae, les Chrysopidae et les Coccinellidae (Tableau 3).

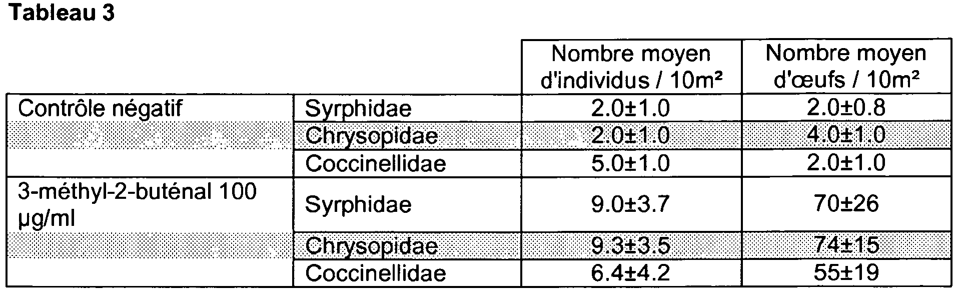

Des essais complémentaires ont été réalisés dans les mêmes conditions, à l'exception de la densité de pulvérisation qui a été augmentée à 100 ml/m² et/ou de la distance entre les bandes pulvérisées qui a été fixée à 30 m ou 50 m. Tenant compte de la dispersion des résultats expérimentaux repris au tableau 3, tous les résultats obtenus sont comparables à plus ou moins 15% à ceux repris dans le tableau 3.

### Exemple 4 : attraction et stimulation de l'oviposition avec l'acide 3-méthyl-2-buténoïque en plein champ de pommes de terre

Dans les mêmes conditions que celles mentionnées pour l'exemple 3, des solutions aqueuses d'acide 3-méthyl-2-buténoïque ont été pulvérisées dans des champs de pommes de terre (*Solanum tuberosum*)*.* Des solutions à 5 µg/ml, 20 µg/ml, 500 µg/ml et 2 mg/ml ont été testées.

Les mêmes relevés que ceux mentionnés dans l'exemple 3 ont été effectués (nombre d'individus piégés et nombre d'oeufs observés sur les plants de pommes de terre (Tableau 4).

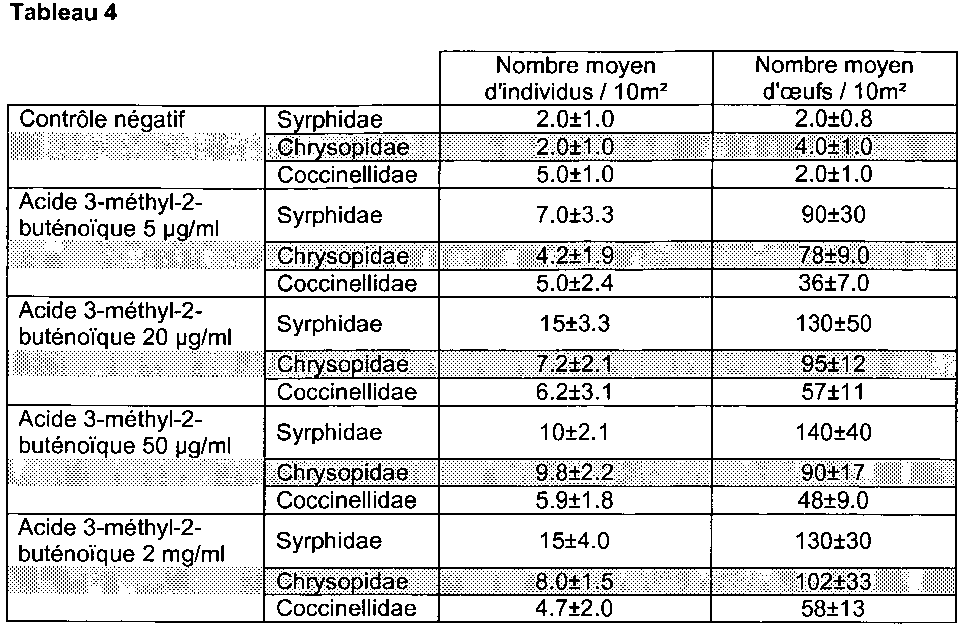

Des essais complémentaires ont été réalisés dans les mêmes conditions, à l'exception de la densité de pulvérisation qui a été augmentée à 100 ml/m² et/ou de la distance entre les bandes pulvérisées qui a été fixée à 30 m ou 50 m. Tenant compte de la dispersion des résultats expérimentaux repris au tableau 4, tous les résultats obtenus sont comparables à plus ou moins 15% à ceux repris dans le tableau 4.

### Exemple 5: attraction et stimulation de l'oviposition avec des mélanges de 3-méthyl-2-buténal et d'acide 3-méthyl-2-buténoïque en plein champ de pommes de terre

Dans les mêmes conditions que celles mentionnées pour l'exemple 3, des mélanges de solutions aqueuses de 3-méthyl-2-buténal et d'acide 3-méthyl-2-buténoïque ont été pulvérisées dans des champs de pommes de terre (*Solanum tuberosum*)*.* Les solutions (mélanges) suivants ont été testés : 200 µg/ml de 3-méthyl-2-buténal + 20 µg/ml d'acide 3-méthyl-2-buténoïque; 200 µg/ml de 3-méthyl-2-buténal + 50 µg/ml d'acide 3-méthyl-2-buténoïque; 500 µg/ml de 3-méthyl-2-buténal + 500 µg/ml d'acide 3-méthyl-2-buténoïque. Les mêmes relevés que ceux mentionnés dans l'exemple 3 ont été effectués (nombre d'individus piégés et nombre d'oeufs observés sur les plants de pommes de terre (Tableau 5).

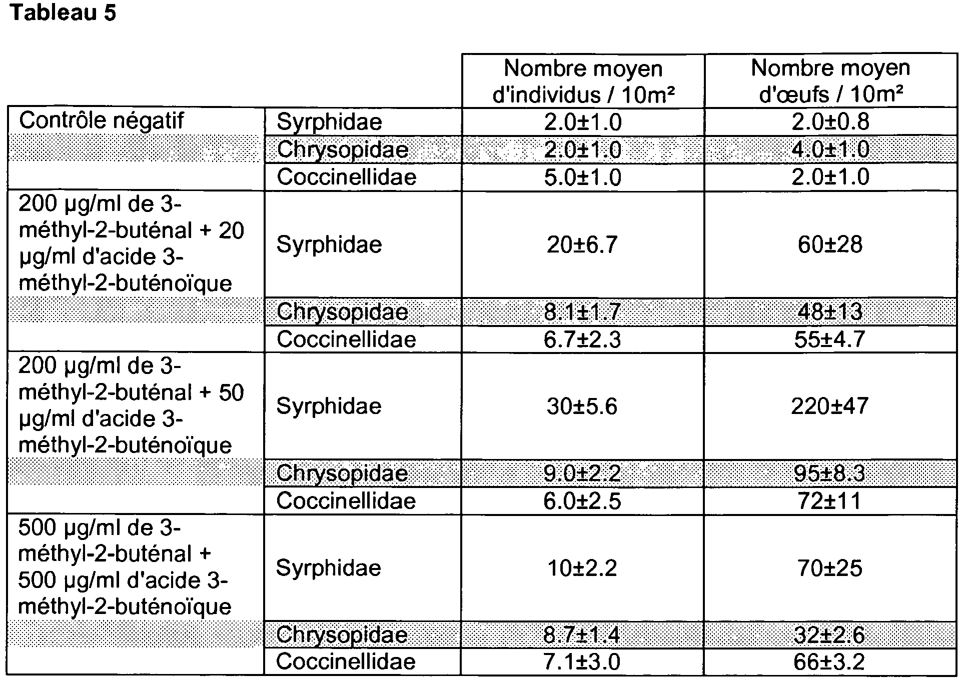

Des essais complémentaires ont été réalisés dans les mêmes conditions, à l'exception de la densité de pulvérisation qui a été augmentée à 100 ml/m² et/ou de la distance entre les bandes pulvérisées qui a été fixée à 30 m ou 50 m. Tenant compte de la dispersion des résultats expérimentaux repris au tableau 5, tous les résultats obtenus sont comparables à plus ou moins 15% à ceux repris dans le tableau 5.

### Exemple 6 : attraction et stimulation de l'oviposition avec une formulation à base de la bactérie Staphylococcus sciuri en plein champ de pommes de terre

La bactérie *Staphylococcus sciuri* a été mise en culture dans le milieu liquide 863 (10g/L glucose + 10g/L d'extrait de levure + 10g/L de peptone de caséine), selon le protocole suivant :
Les cellules, stockée à -80° C dans un milieu contenant 40% de glycérol, sont repiquées stérilement sur milieu gélosé 868 (composition par litre d'eau distillée : 10g de glucose, 10g de peptone de caséine 10g d'extrait de levure et 17g d'agar). Les boîtes de repiquage sont incubées à 25°C pendant 48h.

A partir d'un inoculum provenant du milieu 868 (voir ci-dessus), les précultures sont réalisées dans des Erlenmeyer de 250 ml contenant chacune 100 ml de milieu de culture 863 (composition par litre d'eau distillée : 10g de glucose, 10g de peptone de caséine et 10g d'extrait de levure), la température d'incubation et la vitesse d'agitation sont respectivement de 25°C et 100 rpm.

Production en fioles : Après 48h d'incubation, la pureté des précultures est vérifiée au microscope optique et sur milieu gélosé 868 pour déceler une éventuelle contamination. Ces précultures sont utilisées pour l'inoculation du milieu 863 (préalablement stérilisé pendant 20 minutes à 120°C) en fioles de 500 ml. Le volume des précultures représente 20 à 30% du volume utile des fioles.

Production en fermenteur : Après 48h d'incubation, la pureté des précultures est vérifiée au microscope optique et sur milieu gélosé 868 pour déceler une éventuelle contamination. Ces précultures sont utilisées pour l'inoculation du milieu 863 (préalablement stérilisé pendant 20 minutes à 120°C) en fermenteur. Le volume des précultures représente 5 à 10% du volume utile du fermenteur.

Les conditions usuelles d'une fermentation de la bactérie *Staphylococcus sciuri* sont : Température: 25°C, pH : 7 régulé à l'aide d'HCl 5N et du NaOH 5N, Vitesse d'agitation: 400t/mn, et Débit d'air : 3 vvm.

Durée de culture en fiole : La culture en fiole dure environ 4 à 5 jours pour obtenir une concentration cellulaire entre 10⁸ et 5.10⁸ CFU/ml. La culture est ensuite diluée pour avoir une concentration cellulaire adéquate avec de l'eau distillée contenant 9g/l de NaCl pour obtenir une concentration de 10⁵ à 10⁸ CFU/ml. Cette concentration cellulaire est obtenue à une DO₆₀₀ₙₘ entre 1 et 2. La valeur usuelle est D0₆₀₀ₙₘ=1.6.

Durée de culture en fermenteur : La culture dure 24 à 48h et la concentration cellulaire obtenue est entre 10⁹ et 8.10⁹ CFU/ml. La culture est ensuite diluée pour avoir une concentration cellulaire adéquate avec de l'eau distillée contenant 9g/l de NaCl pour obtenir une concentration de 10⁵ à 10⁸ CFU/ml. Cette concentration cellulaire est obtenue à une DO₆₀₀ₙₘ entre 1 et 2. La valeur usuelle est DO₆₀₀ₙₘ=1.6.

La bactérie a été identifiée comme produisant, entre autres, le 3-méthyl-2-buténal. Ce composé a été identifié à partir du milieu de culture inoculé avec la bactérie *Staphylococcus sciuri* par la technique de Solid-Phase Micro-Extraction (SPME) et des analyses GC-MS (Tableau 6). Le prélèvement des composés volatils par SPME a été effectué à l'aide de fibres Carboxen-PDMS (85µm carboxen-polydiméthylsiloxane, Stableflex) (Supelco, State College, PA) au départ de 20 à 50 µL du milieu de culture inoculé avec la bactérie *Staphylococcus sciuri* depuis 24h. Les prélèvements ont été réalisés à 20±1°C pendant 24 heures dans un incubateur (Jouan Maxi Artic). Après chaque prélèvement, la fibre SPME a été analysée par chromatographie en phase gazeuse / spectrométrie de masse (GC-MS). Les analyses GC-MS ont été effectuées avec un appareillage Agilent 6890N Network GC System couplé à un détecteur de masse Agilent 5973 et équipé d'une colonne capillaire HP-5 (Agilent) (30 m x 0,25 mm ID, 0,25 µm d'épaisseur). Le programme de température du four a été le suivant : 40°C pendant 7 min ; augmentation de 4°C/min à 250°C pendant 5 min ; augmentation de 7°C/min à 280°C pendant 1 min. Les autres conditions de fonctionnement sont les suivantes: gaz vecteur, He, avec un débit constant de 1 ml/min ; température de l'injecteur, 260°C; mode splitless. Les composés volatils ont été identifiés en comparant leurs spectres de masse à ceux stockés dans la bibliothèque Wiley275.L.

La quantification du composé d'intérêt, le 3-méthyl-2-buténal, produit par la bactérie dans la solution, a été réalisée par la méthode de « spiking » (ajout dosé). Pour ce faire, une quantité précise de 3-méthyl-2-buténal (à une concentration de 1 µg/ml) a été ajoutée au milieu de culture contenant la bactérie. Une analyse SPME de cette solution avec ajout dosé a été comparée à l'analyse SPME du milieu de culture avec bactérie sans ajout du composé de synthèse. La différence d'aire des pics entre les deux analyses GC correspond à la quantité de composés produits par la bactérie dans la solution. La concentration dans le milieu de culture obtenue pour le 3-méthyl-2-buténal est mentionnée dans le tableau 6. L'ensemble des composés volatils correspond à 0.01% en poids de la solution.

Dans les mêmes conditions que celles mentionnées pour l'exemple 3, la formulation à base de la bactérie *Staphylococcus sciuri* contenant 1.2 µg/ml de 3-méthyl-2-buténal non filtrée ou filtrée avant application (afin d'éliminer le microorganisme) a été pulvérisée à raison de 10 ml/m² dans des champs de pommes de terre (*Solanum tuberosum*)*.* Les mêmes relevés que ceux mentionnés dans l'exemple 3 ont été effectués (nombre d'individus piégés et nombre d'oeufs observés sur les plants de pommes de terre (Tableau 7).

**Tableau 6**

| Composés volatils de la formulation à base de la bactérie *Staphylococcus sciuri* | Proportion (%) | Concentration dans la formulation (µg/ml) |
|---|---|---|
| 2-propanone | 15.28 | n.d. |
| 2-méthyl-2-propanol | 1.99 | n.d. |
| Acide acétique | 36.41 | n.d. |
| 2,3-butanedione | 2.02 | n.d. |
| 2-méthyl-1-propanol | 1.25 | n.d. |
| 3-hydroxy-2-butanone | 1.41 | n.d. |
| 3-méthyl-1-butanol | 22.7 | n.d. |
| 3-méthyl-2-buténal | 0.65 | 1.2 |
| Acide butanoïque | 1.28 | n.d. |
| Acide 3-méthyl-butanoïque | 1.21 | n.d. |
| Acide 2-méthyl-butanoïque | 1.29 | n.d. |
| 2,5-diméthylpyrazine | 1.81 | n.d. |
| 2-éthyl-hexanol | 1.44 | n.d. |
| Benzeneéthanol | 2.31 | n.d. |

| | | |
|---|---|---|
| n.d. = non déterminé | | |

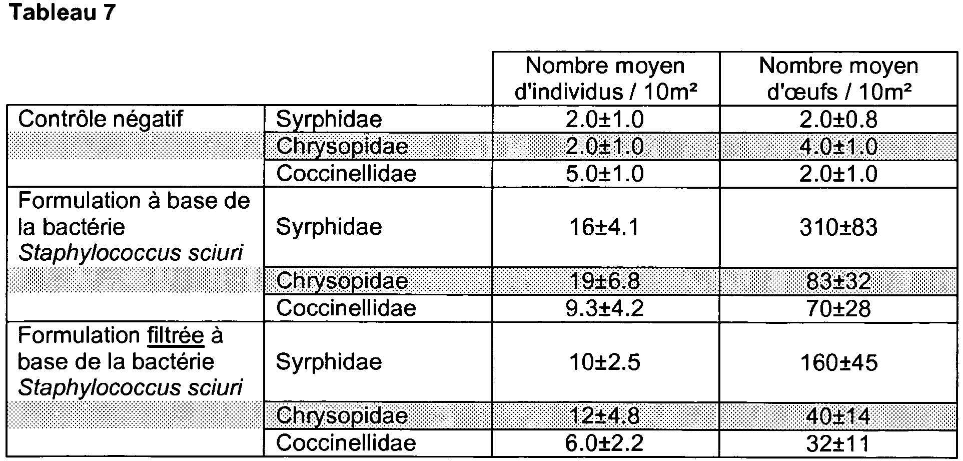

Des essais complémentaires ont été réalisés dans les mêmes conditions, à l'exception de la densité de pulvérisation qui a été augmentée à 100 ml/m² et/ou de la distance entre les bandes pulvérisées qui a été fixée à 30 m ou 50 m. Tenant compte de la dispersion des résultats expérimentaux repris au tableau 7, tous les résultats obtenus sont comparables à plus ou moins 15% à ceux repris dans le tableau 7.

La même formulation à base de la bactérie *Staphylococcus sciuri* a été placée dans des récipients (diffuseurs) de 20 ml ouverts (surface ouverte de 5 cm²) placés par terre en raison d'un diffuseur /10 m². Les résultats obtenus sont comparables aux résultats repris dans le tableau 7.

### Exemple 7 : attraction et stimulation de l'oviposition en plein champ de pommes de terre ou de fèves lors d'un lâcher de syrphes Episyrphus balteatus (De Geer) (Diptera : Syrphidae)

Dans les mêmes conditions que celles mentionnées pour l'exemple 3 et dans des champs de pommes de terre (*Solanum tuberosum*) ou de fèves (*Vicia faba*), un lâcher de 1000 syrphes *Episyrphus balteatus* (âgés de 2 à 4 semaines) a été effectué après que ces champs aient été traités avec les formulations suivantes : (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (voir exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Les contrôles négatifs ont été assurés par des champs non traitées. Après 12 à 24h, le nombre d'oeufs de syrphe / 10 m² a été estimé (Tableau 8).

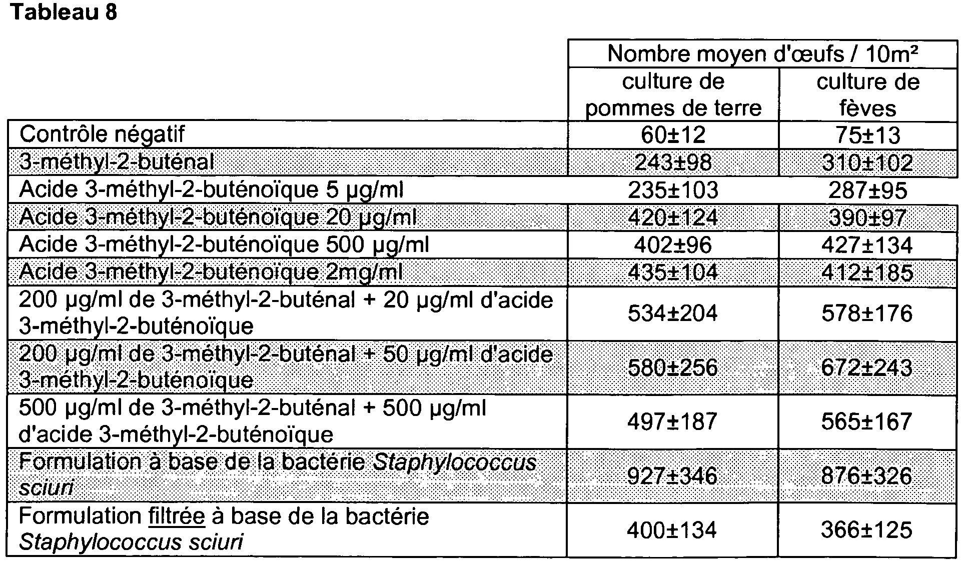

Des essais complémentaires ont été réalisés dans les mêmes conditions, à l'exception de la densité de pulvérisation qui a été augmentée à 100 ml/m² et/ou de la distance entre les bandes pulvérisées qui a été fixée à 30 m ou 50 m. Tenant compte de la dispersion des résultats expérimentaux repris au tableau 8, tous les résultats obtenus sont comparables à plus ou moins 15% à ceux repris dans le tableau 8.

### Exemple 8 : augmentation de la pollinisation de fraisiers cultivés sous serre tunnel en plastique par introduction de syrphes Episyrphus balteatus (De Geer) (Diptera : Syrphidae)

Les essais ont été réalisés dans des serres tunnel en plastique (L = 10m ; l = 3m) comprenant 200 plants de fraisiers (*Fragaria* sp.) plantés sur des lignes espacées de 30 cm en respectant une distance de 50 cm entre les plants. Lorsque la floraison des fraisiers a été observée, les fraisiers ont été pulvérisés avec 10 ml/m² des formulations suivantes: (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (voir exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Des surfaces identiques non traitées ont constitués les contrôles négatifs.

Un lâcher de 100 syrphes *Episyrphus balteatus* (âgés de 2 à 4 semaines) a été réalisé au centre de la serre. Des fleurs artificielles composées de miel, de pollen et de sucre ont également été placées dans la serre afin d'assurer la nutrition des syrphes introduits. Pour chaque traitement, le taux de pollinisation a été estimé selon le nombre de fruits obtenus sur l'ensemble des 200 plants lors de la récolte par rapport au nombre de fleurs comptées lors de la floraison (Tableau 9).

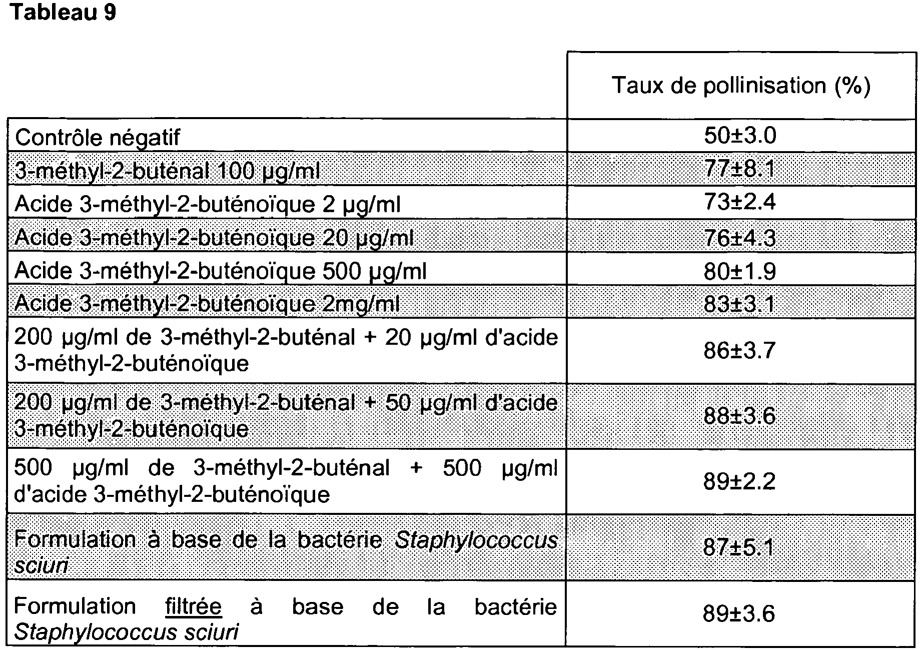

Des essais complémentaires ont été réalisés dans les mêmes conditions, à l'exception de la densité de pulvérisation qui a été augmentée à 100 ml/m². Tenant compte de la dispersion des résultats expérimentaux repris au tableau 9, tous les résultats obtenus sont comparables à plus ou moins 10% à ceux repris dans le tableau 9.

### Exemple 9: reproduction artificielle (sans plantes ni pucerons) de syrphes Episyrphus balteatus (De Geer) (Diptera : Syrphidae)

Une centaine de syrphes adultes *E. balteatus* sont élevés dans une enceinte (Temp = 20 ± 1 °C ; HR = 60 ± 10% ; 16h de photopériodisme) contenant du pollen de provenance florale variée, du sucre et de l'eau. Afin d'induire artificiellement l'oviposition (sans plantes ni pucerons), un support inerte (lamelle en plastique) traité avec 0.1 ml/cm² des formulations suivantes est introduit dans l'enceinte : (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (voir exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Des lamelles en plastique identiques non traitées ont constitués les contrôles négatifs. Les lamelles comportant les oeufs ainsi obtenus ont alors été placées à proximité d'une diète artificielle (milieu nutritif artificiel) composée de pollen, d'extrait de levure et de saccharose (10 g/L d'eau distillée pour chaque constituant) pour nourrir les larves issues de ces oeufs et obtenir des adultes.

Les nombres d'oeufs obtenus pour chaque traitement ont été comptabilisés et le % d'adultes obtenus au départ de ces mêmes oeufs a été établi (Tableau 10).

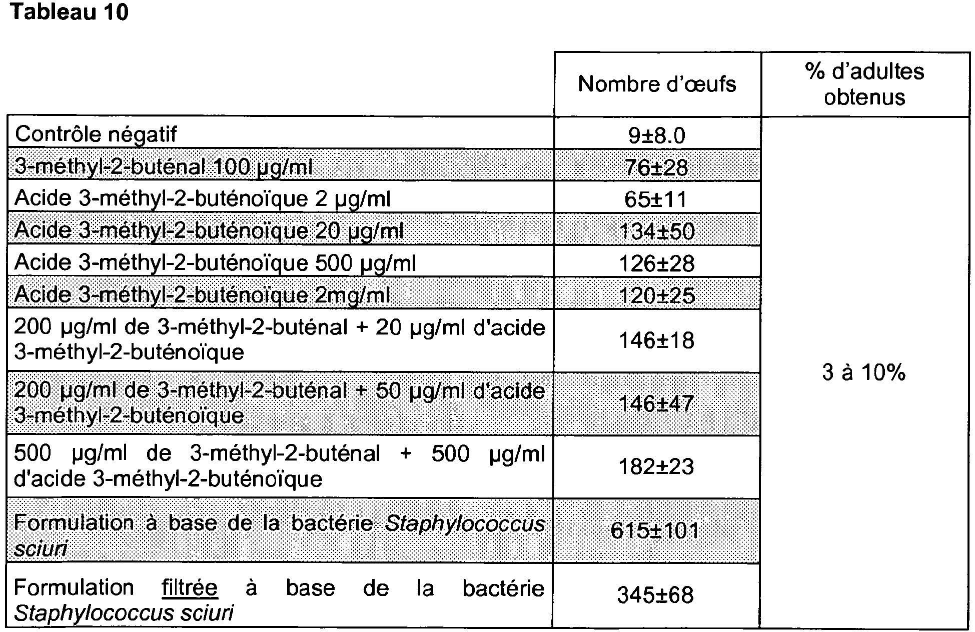

Des essais complémentaires ont été réalisés dans les mêmes conditions, à l'exception de la densité de pulvérisation qui a été augmentée à 1 ml/cm². Tenant compte de la dispersion des résultats expérimentaux repris au tableau 10, tous les résultats obtenus sont comparables à plus ou moins 10% à ceux repris dans le tableau 10.

### Exemple 10 : efficacité des formulations pour la lutte biologique contre les pucerons

Sur le terrain, cinq parcelles (1m²) comportant des plants de fève (*Vicia faba*) ont été mises en place et infestées de 500 pucerons (*Acyrthosiphon pisum*). Ces plants ont été traités avec 10 ml/m² des formulations suivantes : (1) solution aqueuse de 3-méthyl-2-buténal à 100 µg/ml ; (2) solution aqueuse d'acide 3-méthyl-2-buténoïque à 5 µg/ml, 20 µg/ml, 500 µg/ml et 2mg/ml ; (3) mélange de 200 µg/ml de 3-méthyl-2-buténal + 20 µg/ml d'acide 3-méthyl-2-buténoïque, mélange de 200 µg/ml de 3-méthyl-2-buténal + 50 µg/ml d'acide 3-méthyl-2-buténoïque, mélange de 500 µg/ml de 3-méthyl-2-buténal + 500 µg/ml d'acide 3-méthyl-2-buténoïque ; (4) formulation à base de la bactérie *Staphylococcus sciuri* contenant 1.2 µg/ml de 3-méthyl-2-buténal (voir exemple 6) (bactérie mise en culture dans le milieu liquide 863 = 10g/L glucose + 10g/L d'extrait de levure + 10g/L de peptone de caséine) ; (5) formulation à base de la bactérie *Staphylococcus sciuri* contenant 1.2 µg/ml de 3-méthyl-2-buténal (voir exemple 6) filtrée avant application (afin d'éliminer le microorganisme). Des parcelles identiques non traitées ont constitués les contrôles négatifs.

Ces essais ont montré que des populations moyennes de 500 pucerons (au départ) sont éliminées après 7 à 8 jours suite à la pulvérisation des plants avec les différentes formulations. En moyenne, suite à la pulvérisation de chacune de ces formulations, 45±5.0 oeufs de prédateurs (d'*Episyrphus balteatus* ou de *Chrysopa carnea* ou d'*Adalia bipunctata*) ont été observés sur les plants de fève. Par contre, une moyenne inférieure de 18±7.0 oeufs a été observée sur les plants uniquement infestés de 500 pucerons et non pulvérisés avec les formulations, ce qui a conduit à l'élimination des pucerons seulement après plus de 10 jours. Le traitement par les compositions comprenant de l'acide 3-méthyl-2-buténoïque et/ou du 3-méthyl-2-buténal accélère la lutte contre les pucerons et réduit le temps d'infection de 20 à 40%.

## Revendications

1. Utilisation d'une composition comprenant de l'acide 3-méthyl-2-buténoïque et/ou du 3-méthyl-2-buténal, pour attirer des insectes prédateurs ou des insectes parasitoïdes d'insectes ravageurs de plantes et induire l'oviposition desdits prédateurs ou parasitoïdes.

2. Procédé pour attirer des insectes prédateurs d'insectes ravageurs de plantes ou des insectes parasitoïdes d'insectes ravageurs de plantes et induire l'oviposition desdits prédateurs ou parasitoïdes, comprenant l'utilisation d'une composition comprenant de l'acide 3-méthyl-2-buténoïque et/ou du 3-méthyl-2-buténal.

3. Utilisation ou procédé selon la revendication 1 ou 2, pour accroitre le taux de pollinisation de plantes.

4. Utilisation ou procédé selon la revendication 1 ou 2, pour l'élevage d'insectes prédateurs ou d'insectes parasitoïdes d'insectes ravageurs de plantes.

5. Utilisation ou procédé selon la revendication 1 ou 2, **caractérisé en ce que** la composition est destinée à prévenir l'apparition d'insectes ravageurs de plantes ou à lutter contre ces ravageurs.

6. Utilisation ou procédé selon l'une quelconque des revendications 1 à 5, **caractérisé en ce que** la composition comprend de l'acide 3-méthyl-2-buténoïque et du 3-méthyl-2-buténal.

7. Utilisation ou procédé selon l'une quelconque des revendications 1 à 6, **caractérisé en ce que** la composition comprend en outre la bactérie *Staphylococcus sciuri.*

8. Utilisation ou procédé selon l'une quelconque des revendications 1 à 7, **caractérisé en ce que** la composition comprend au moins un composé choisi dans le groupe comprenant le 2-propanone, le 2-méthyl-2-propanol, l'acide acétique, le 2,3-butanedione, le 2-méthyl-1-propanol, le 3-hydroxy-2-butanone, le 3-méthyl-1-butanol, l'acide butanoïque, l'acide 3-méthyl-butanoïque, l'acide 2-méthyl-butanoïque, la 2,5-diméthylpyrazine, le 2-éthyl-hexanol, le benzèneéthanol et leurs mélanges.

9. Utilisation ou procédé selon l'une quelconque des revendications 1 à 8, **caractérisé en ce que** la concentration minimale en acide 3-méthyl-2-buténoïque est égale ou supérieure à 0.005 mM.

10. Utilisation ou procédé selon l'une quelconque des revendications 1 à 9, **caractérisé en ce que** la concentration minimale en 3-méthyl-2-buténal est égale ou supérieure à 0.005 mM.

11. Utilisation ou procédé selon l'une quelconque des revendications 1 à 10, **caractérisée en ce que** les insectes prédateurs des ravageurs appartiennent à l'ordre des Neuroptera, des Coleoptera ou des Diptera.

12. Utilisation ou procédé selon l'une quelconque des revendications 5 à 11 **caractérisé en ce que** lesdits insectes ravageurs appartiennent à l'ordre des Homoptera.

13. Utilisation ou procédé selon l'une quelconque des revendications 5 à 12, **caractérisé en ce que** lesdits insectes ravageurs sont des pucerons, des cochenilles, des aleurodes, ou des psylles.

14. Utilisation ou procédé selon l'une quelconque des revendications 1 à 13, **caractérisé en ce que** la composition est susceptible d'être obtenue par la mise en culture de la bactérie *Staphylococcus sciuri.*

15. Utilisation ou procédé selon l'une quelconque des revendications 1 à 14, **caractérisé en ce que** la composition est administrée par pulvérisation, par dispersion, par épandage ou par le placement de diffuseurs contenant la composition.

## Patentansprüche

1. Verwendung einer Zusammensetzung, die 3-Methyl-2-Butensäure und/oder 3-Methyl-2-butenal umfasst, um Raubinsekten oder Insekten, die pflanzenschädigende Insekten parasitieren, anzulocken und die Eiablage dieser Raubinsekten oder parasitierenden Insekten zu induzieren.

2. Verfahren zum Anlocken von Raubinsekten von pflanzenschädigenden Insekten oder von Insekten, die pflanzenschädigende Insekten parasitieren, und zum Induzieren der Eiablage dieser Raubinsekten oder parasitierenden Insekten, umfassend die Verwendung einer Zusammensetzung, die 3-Methyl-2-butensäure und/oder 3-Methyl-2-butenal umfasst.

3. Verwendung oder Verfahren nach Anspruch 1 oder 2 zum Erhöhen der Bestäubungsrate von Pflanzen.

4. Verwendung oder Verfahren nach Anspruch 1 oder 2 zum Züchten von Raubinsekten oder Insekten, die pflanzenschädigende Insekten parasitieren.

5. Verwendung oder Verfahren nach Anspruch 1 oder 2, **dadurch gekennzeichnet, dass** die Zusammensetzung dem Verhindern des Auftretens von pflanzenschädigenden Insekten oder dem Kampf gegen diese schädigenden Insekten dient.

6. Verwendung oder Verfahren nach einem der Ansprüche 1 bis 5, **dadurch gekennzeichnet, dass** die Zusammensetzung 3-Methyl-2-Butensäure und 3-Methyl-2-Butenal umfasst.

7. Verwendung oder Verfahren nach einem der Ansprüche 1 bis 6, **dadurch gekennzeichnet, dass** die Zusammensetzung weiterhin das Bakterium *Staphylococcus sciuri* umfasst.

8. Verwendung oder Verfahren nach einem der Ansprüche 1 bis 7, **dadurch gekennzeichnet, dass** die Zusammensetzung mindestens eine Verbindung, ausgewählt aus der Gruppe umfassend 2-Propanon, 2-Methyl-2-propanol, Essigsäure, 2,3-Butandion, 2-Methyl-1-propanol, 3-Hydroxy-2-butanon, 3-Methyl-1-butanol, Butansäure, 3-Methylbutansäure, 2-Methylbutansäure, 2,5-Dimethylpyrazin, 2-Ethylhexanol, Benzolethanol und ihre Mischungen, umfasst.

9. Verwendung oder Verfahren nach einem der Ansprüche 1 bis 8, **dadurch gekennzeichnet, dass** die Minimalkonzentration an 3-Methyl-2-butensäure 0,005 mM oder darüber beträgt.

10. Verwendung oder Verfahren nach einem der Ansprüche 1 bis 9, **dadurch gekennzeichnet, dass** die Minimalkonzentration an 3-Methyl-2-butenal 0,005 mM oder darüber beträgt.

11. Verwendung oder Verfahren nach einem der Ansprüche 1 bis 10, **dadurch gekennzeichnet, dass** die Raubinsekten von Schadinsekten zu der Ordnung der Neuroptera, Coleoptera oder Diptera gehören.

12. Verwendung oder Verfahren nach einem der Ansprüche 5 bis 11, **dadurch gekennzeichnet, dass** es sich bei den Schadinsekten um die Ordnung der Homoptera handelt.

13. Verwendung oder Verfahren nach einem der Ansprüche 5 bis 12, **dadurch gekennzeichnet, dass** es sich bei den Schadinsekten um Blattläuse, Schildläuse, Mottenschildläuse oder Blattflöhe handelt.

14. Verwendung oder Verfahren nach einem der Ansprüche 1 bis 13, **dadurch gekennzeichnet, dass** die Zusammensetzung durch Kultivieren des Bakteriums *Staphylococcus sciuri* erhältlich sein kann.

15. Verwendung oder Verfahren nach einem der Ansprüche 1 bis 14, **dadurch gekennzeichnet, dass** die Zusammensetzung durch Versprühen, Streuen, Verteilen oder durch das Platzieren von Diffusoren, die die Zusammensetzung enthalten, ausgebracht wird.

## Claims

1. Use of a composition comprising 3-methyl-2-butenoic acid and/or 3-methyl-2-butenal, for attracting insects which are predators or insects which are parasitoids of plant insect pests and inducing the oviposition of said predators or parasitoids.

2. Method for attracting insects which are predators of plant insect pests or insects which are parasitoids of plant insect pests and inducing the oviposition of said predators or parasitoids, comprising the use of a composition comprising 3-methyl-2-butenoic acid and/or 3-methyl-2-butenal.

3. Use or method according to Claim 1 or 2, for increasing the plant pollination level.

4. Use or method according to Claim 1 or 2, for breeding insects which are predators or insects which are parasitoids of plant insect pests.

5. Use or method according to Claim 1 or 2, **characterized in that** the composition is intended for preventing the appearance of plant insect pests or for controlling these pests.

6. Use or method according to any one of Claims 1 to 5, **characterized in that** the composition comprises 3-methyl-2-butenoic acid and 3-methyl-2-butenal.

7. Use or method according to any one of Claims 1 to 6, **characterized in that** the composition also comprises the *Staphylococcus sciuri* bacterium.

8. Use or method according to any one of Claims 1 to 7, **characterized in that** the composition comprises at least one compound chosen from the group comprising 2-propanone, 2-methyl-2-propanol, acetic acid, 2,3-butanedione, 2-methyl-1-propanol, 3-hydroxy-2-butanone, 3-methyl-1-butanol, butanoic acid, 3-methylbutanoic acid, 2-methylbutanoic acid, 2,5-dimethylpyrazine, 2-ethylhexanol, benzeneethanol and mixtures thereof.

9. Use or method according to any one of Claims 1 to 8, **characterized in that** the minimum concentration of 3-methyl-2-butenoic acid is greater than or equal to 0.005 mM.

10. Use or method according to any one of Claims 1 to 9, **characterized in that** the minimum concentration of 3-methyl-2-butenal is greater than or equal to 0.005 mM.

11. Use or method according to any one of Claims 1 to 10, **characterized in that** the insects which are predators of pests belong to the order Neuroptera, Coleoptera or Diptera.

12. Use or method according to any one of Claims 5 to 11, **characterized in that** said insect pests belong to the order Homoptera.

13. Use or method according to any one of Claims 5 to 12, **characterized in that** said insect pests are aphids, mealybugs, whitefly or jumping plant lice.

14. Use or method according to any one of Claims 1 to 13, **characterized in that** the composition can be obtained by culturing the *Staphylococcus sciuri* bacterium.

15. Use or method according to any one of Claims 1 to 14, **characterized in that** the composition is administered by spraying, by scattering, by spreading or by the placement of diffusers containing the composition.
